# EUROPEAN PATENT APPLICATION

(11) **EP 1 936 976 A2**
(43) Date of publication of application: **25.06.2008**
(21) Application number: 07118055.8
(22) Date of filing: 08.10.2007
(51) Int. Cl.: H04N 7/088, H04N 5/445

(54) **Storing Open Caption Information**

(30) Priority: 21.12.2006 KR 20060131644
(71) Applicant: Samsung Electronics Co., Ltd., Suwon-si, Gyeonggi-do 442-742 (KR)
(72) Inventor: Shin, Su-won 134-804, Hwanggol-maeul 1 danji Apartment, Gyeonggi-do (KR)
(74) Representative: Walaski, Jan Filip

(57) **Abstract**

A broadcast receiving apparatus and a method for storing open caption information in the broadcast receiving apparatus are provided. The broadcast receiving apparatus includes a determiner which determines whether a received broadcast signal comprises open caption information; a detector which detects the open caption information, if it is determined that the open caption information is present; and a storage unit which stores the detected open caption information. Therefore, the open caption information may be stored and displayed, and thus user convenience can be enhanced.

## Description

The invention relates to storing open caption information, particularly but not exclusively to a broadcast receiving apparatus capable of storing and displaying open caption information and a method for storing open caption information in the broadcast receiving apparatus.

Broadcast receiving apparatuses generally tune to broadcast signals transmitted from broadcasting stations, and demodulate the signals to be displayed on a screen. Broadcast receiving apparatuses include, for example, televisions (TVs), set top boxes, or other devices. Hereinafter, TVs are exemplified and explained.

A broadcast program may be displayed on a TV screen. Additionally, captions and on-screen display (OSD) may be also displayed on the TV screen.

Captions are divided into open captions and closed captions. Open captions, generally referred to as "captions", means contents unconditionally displayed on a TV screen if broadcast signals are emitted from broadcasting stations. Closed captions mean "concealed captions" which are displayed on a screen only when the so-called "caption receiving function" is activated.

Specifically, open caption refers to content displayed regardless of whether a viewer wishes to view it, and can comprise opening credits for a television program or film, a song title or the name of the singer, news headlines, the score of a sports game, a preview or synopsis of an upcoming program, a news flash, or the like.

For closed captions, speech and specific additional information relating to programs, or other information which is desired by a viewer may be displayed.

Closed caption information may be separately stored because text data is transmitted separately through closed captions. However, open caption information may be displayed only once, making it generally impossible for a user to view the open caption information again after its initial broadcast.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a broadcast receiving apparatus and a method for storing open caption information in the broadcast receiving apparatus so that the open caption information can be stored and displayed, and thus user convenience may be enhanced.

According to an aspect of the present invention, there is provided a broadcast receiving apparatus comprising a determiner which determines whether open caption information is displayed on a screen; a detector which detects the open caption information if it is determined that the open caption information is displayed; and a storage unit which stores the detected open caption information.

The determiner may divide at least one portion of each frame displayed on the screen into a plurality of blocks, and search for a matching block among peripheral frames to determine that the open caption information is displayed if the searched block represents motion in a certain direction.

The detector may apply a capture window to each frame displayed on the screen, and comprise a capturing part which captures the open caption information and a recognizing unit which recognizes text fields in the captured open caption information.

The storage unit may store the text fields recognized by the recognizing unit as the open caption information.

The detector may apply a capture window to each frame displayed on the screen and comprise a capturing unit which captures the open caption information, and the storage unit may store the open caption information captured by the capturing unit. The apparatus may further comprise an input unit which enables an open caption information detection mode to be selected; and a controller which controls the determiner and detector to detect and store the open caption information according to whether the open caption information is displayed, if the open caption information detection mode is selected.

Additionally, the apparatus may further comprise an input unit which receives an open caption information display command; and a controller which controls such that the stored open caption information is displayed on the screen, if the open caption information display command is input.

The apparatus may further comprise an on-screen display (OSD) processor which generates a list of the open caption information stored in the storage unit and displays the list on the screen if the open caption information display command is input, and the controller may control such that the open caption information selected from the list is displayed on the screen.

The OSD processor may generate a list including at least one of the date/time of storage of the open caption information stored in the storage unit, the title of the program in which the open caption information is detected, and the keywords from the open caption information, and display the list on the screen.

According to another aspect of the present invention, there is provided a method for storing open caption information in a broadcast receiving apparatus, the method comprising determining whether open caption information is displayed on a screen; detecting the open caption information if it is determined that the open caption information is displayed; and storing the detected open caption information.

The determining may comprise dividing at least one portion of each frame displayed on the screen into a plurality of blocks, and searching for a matching block among peripheral frames to determine that the open caption information is displayed if the searched block represents motion in a certain direction.

The detecting may comprise applying a capture window to each frame displayed on the screen to capture the open caption information; and recognizing text fields in the captured open caption information.

The storing may comprise storing the recognized text fields as the open caption information.

The detecting may comprise applying a capture window to each frame displayed on the screen to capture the open caption information, and the storing may comprise storing the captured open caption information.

The method may further comprise determining whether an open caption information detection mode is selected, and the determining, detecting, and storing may be performed if the open caption information detection mode is selected. Additionally, the method may further comprise receiving an open caption information display command; and displaying the stored open caption information on the screen, if the open caption information display command is input.

The method may further comprise generating a list of the stored open caption information and displaying the list on the screen if the open caption information display command is input, and the displaying the stored open caption information may comprise displaying the open caption information selected from the list on the screen.

The generating and displaying the list may comprise generating a list including at least one of the date/time of storage of the stored open caption information, the title of the program in which the open caption information is detected, and the keywords from the open caption information, and displaying the list on the screen.

Embodiments of the invention will now be described, by way of example, with reference to the accompanying drawings, in which:
Figure 1 is a block diagram of a broadcast receiving apparatus according to an exemplary embodiment of the present invention;
Figure 2 is a block diagram of a broadcast receiving apparatus according to another exemplary embodiment of the present invention;
Figure 3 is a mimetic diagram showing an example of a method for determining whether open caption information is displayed, according to an exemplary embodiment of the present invention;
Figure 4 is a mimetic diagram showing an example of a method for capturing open caption information according to an exemplary embodiment of the present invention;
Figure 5 is a mimetic diagram showing an example of a list of open caption information according to an exemplary embodiment of the present invention;
Figure 6 is a flowchart illustrating the method steps involved in storing open caption information according to an exemplary embodiment of the present invention;
Figure 7 is a flowchart illustrating in detail the steps involved in an open caption detecting method of Figure 6 according to an exemplary embodiment of the present invention; and
Figure 8 is a flowchart illustrating the method steps involved in displaying open caption information according to an exemplary embodiment of the present invention.

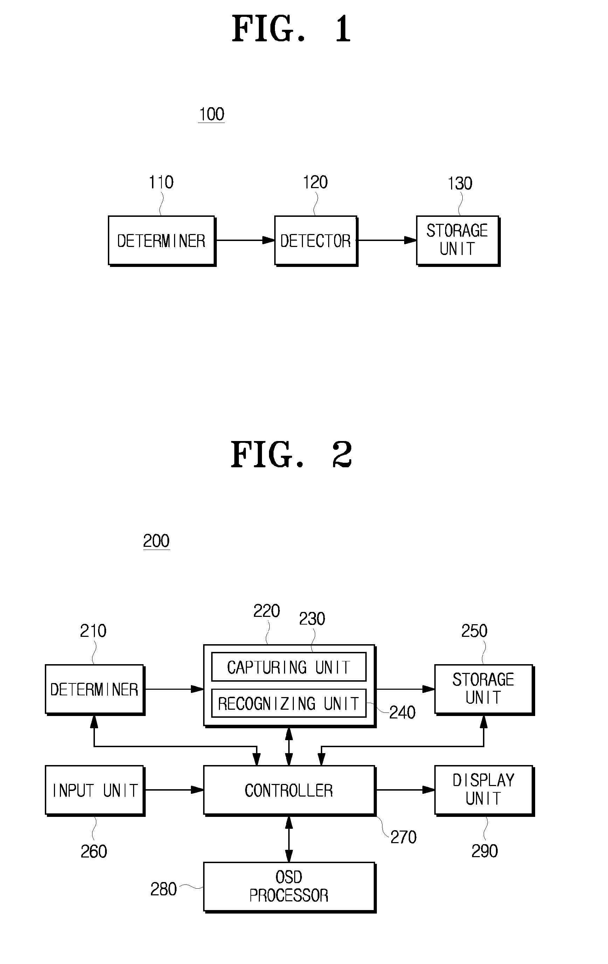

Figure 1 is a block diagram of a broadcast receiving apparatus according to an exemplary embodiment of the present invention.

As shown in Figure 1, a broadcast receiving apparatus 100 comprises a determiner 110, a detector 120, and a storage unit 130. The broadcast receiving apparatus 100 tunes to a broadcast channel selected by a user and demodulates the signal on the channel among broadcast signals received through an antenna. The demodulated broadcast signal is divided into an audio signal and a video signal, and the signals are decoded. The decoded audio signal is output through a speaker, and the decoded video signal is displayed on a screen.

The determiner 110 determines whether open caption information is displayed on a screen. Specifically, the determiner 110 divides at least one portion of each frame displayed on the screen into a plurality of blocks, and searches for a matching block in peripheral frames (e.g., neighbouring frames and subsequent frames).

In other words, at least one portion of each frame is divided into a plurality of blocks, and a block matching a block in a previous frame is searched for by checking a pixel value of each block. The pixel value may be the average value of pixels in each block.

If, for instance, a block is found to have moved in a certain direction, it can be determined that open caption information is displayed on the part of the screen containing that block. For example, if the block searched for moves from the right to the left, the determiner 110 may determine that the open caption information is displayed.

Additionally, since the open caption information is not displayed at all times, the determiner 110 may periodically determine whether the open caption information is displayed on the screen.

If it is determined that the open caption information is displayed, the detector 120 may detect the open caption information. In other words, the detector 120 may capture the open caption information from each frame displayed on the screen to detect the open caption information.

The storage unit 130 may store various information of the broadcast receiving apparatus 100. Additionally, the storage unit 130 may store the detected open caption information.

Figure 2 is a block diagram of a broadcast receiving apparatus according to another exemplary embodiment of the present invention.

In Figure 2, a broadcast receiving apparatus 200 may comprise a determiner 210, a detector 220, a storage unit 250, an input unit 260, a controller 270, an on-screen display (OSD) processor 280, and a display unit 290.

The determiner 210 may determine whether open caption information is displayed on a screen of the display unit 290 under the control of the controller 270. Herein, detailed explanation relating to the determiner 210 which substantially serves as the determiner 110 of Figure 1 shall be omitted.

The detector 220 may comprise a capturing unit 230 and a recognizing unit 240. The capturing unit 230 may apply a capture window to each frame displayed on the screen of the display unit 290 to capture the open caption information.

Specifically, the capturing unit 230 may apply the capture window to a certain portion of each frame to capture the open caption information appearing in the caption window. Text fields within the open caption information may be captured in a pre-processing method from the open caption information appearing in the caption window.

The pre-processing method, in one example, comprises binarization, noise removal, field division, feature extraction, and normalization. The binarization refers to the process of converting pixel values to 0 or 1 on the basis of a comparison between a density value associated with the frame or a portion of the frame and a set threshold value. Each frame is, for instance, represented by an analogue density value. The threshold value may be generally set to an appropriate value for a target image, such it enables open caption information to be distinguished from background features of the image.

Noise removal refers to the process of removing noise by filtering high-frequency noise associated with the resolution and/or other characteristics of the equipment.

The recognizing unit 240 may recognize text fields in the captured open caption information.

The captured open caption information is in the form of an image, and a method for recognizing text fields in the open caption information may be variously implemented by well-known technologies.

Hereinafter, an example of a method for recognizing text fields in the captured open caption information will be explained.

The recognizing unit 240 searches for text candidate fields using image characteristics, such as colour continuity, lightness change, and colour change of the text fields. The recognizing unit 240 then checks using a multi-resolution wavelet transform whether the candidate fields are in the form of swaths, in other words, a narrow strip, or have other characteristics indicative of text. For instance, if a field formed of swaths is present, this can indicate that the candidate fields correspond to text fields, since text fields are formed of swaths.

The colour continuity means that most of text fields appear with the same colour, and can for instance be distinguished from surrounding pixels on this basis. The lightness change refers to a change in the lightness difference, for instance brightness or contrast, between the text fields and peripheral fields and means that the edge density is high.

The colour change refers to a change in the colour difference between the text fields and peripheral fields, and may be expressed according to the chromatic dispersion value more exactly than the lightness change.

Information on the orientation of text fields formed of swaths is extracted using a multi-resolution wavelet transform, and the final text field is recognized by sorting the extracted information using a support vector machine (SVM).

Accordingly, the text fields may be recognized relatively consistently, even though the background of the captured open caption information may be varied or involve complex patterns.

In addition, the text fields may be recognized using a thinning technique or other feature recognition techniques.

The recognizing unit 240 performs quantization using the difference in gray level between the text fields and background fields, and then carries out the pre-process, such as thinning or contour detection of the quantized image. Next, an operation for recognizing each text field is performed.

The storage unit 250 may store the captured open caption information. In other words, the storage unit 250 may store the text fields recognized by the recognizing unit 240 as open caption information. The stored open caption information may be text information in the form of ASCII code and UNI code. Accordingly, the open caption information may be stored in the storage unit 250 while occupying less storage space in the storage unit 250 than, for instance, the corresponding image data.

The input unit 260 may receive various setting commands for manipulating the broadcast receiving apparatus 200. Additionally, the input unit 260 may enable an open caption information detection mode to be selected, and receive an open caption information display command. The input unit 260 may be implemented by buttons and an operating panel which are included in an image receiving apparatus, and a remote controller.

The open caption information detection mode refers to a mode capable of detecting the open caption information if a viewer desires to store the open caption information. The open caption information display command refers to a command for displaying the open caption information stored in the storage unit 250.

The controller 270 controls the entire operation of the broadcast receiving apparatus 200. Additionally, if the open caption information detection mode is selected by the input unit 260, the controller 270 may control the determiner 210 and the detector 220 to detect and store the open caption information according to whether the open caption information is displayed.

If the open caption information detection mode is not selected, the controller 270 may control the determiner 210 and the detector 220 so that the open caption information may be not detected and stored even though the open caption information is displayed.

Additionally, if the open caption information display command is input by the input unit 260, the controller 270 may control the open caption information stored in the storage unit 250 to be displayed on the screen of the display unit 290.

In addition, when displaying the open caption information on the screen of the display unit 290, the controller 270 may control the stored open caption information to be displayed at a time or displayed while moving from the right to the left, for instance in the same manner in which the open caption information was originally displayed.

The controller 270 may control the open caption information selected from a list generated by the OSD processor 280 to be displayed on the screen of the display unit 290. The open caption information may be displayed in the same manner as described above.

The OSD processor 280 may generate a list including at least one of the date and time of storage of the open caption information stored in the storage unit 250, the title of the program in which the open caption information is detected, and the keywords from the open caption information, and display the list on the screen of the display unit 290, under the control of the controller 270. An initial word of the open caption information may be set as a keyword from the open caption information.

The display unit 290 comprising the screen may display various information. Additionally, the display unit 290 may display the open caption information under the control of the controller 270.

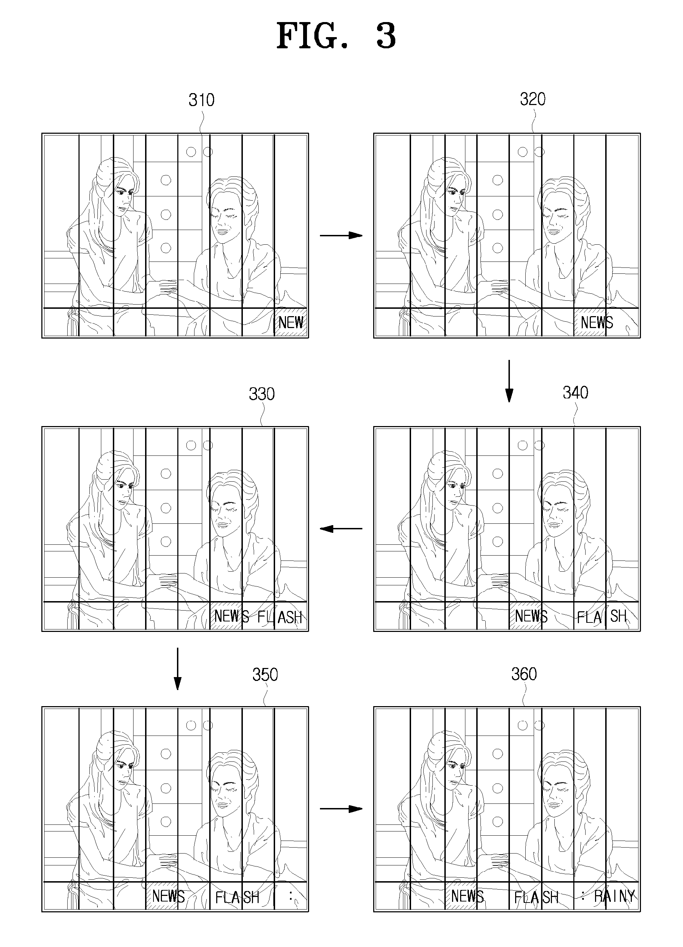

Figure 3 is a mimetic diagram showing an example of a method for determining whether open caption information is displayed, according to an exemplary embodiment of the present invention.

Each frame displayed on a screen of a broadcast receiving apparatus is illustrated in Figure 3.

A determiner respectively divides a portion of frames 310 to 360 into a plurality of blocks, and checks the pixel value of each block.

If a block pixel value of a frame 310 in which an open caption information "New" appears is 230, the determiner may check whether a block matched with the block of the frame 310 is present in a next frame 320, and then check whether a block matched with the block of the frame 310 is present in a next frame 330.

The block pixel values of the respective frames 310 to 360 are searched in the above fashion, and as a result, it is determined that the open caption information is displayed if the searched block represents motion from the right to the left.

Although Figure 3 shows the situation in which the open caption information is checked at the bottom edge of the screen, the open caption information may be confirmed on the entire screen or the right edge of the screen.

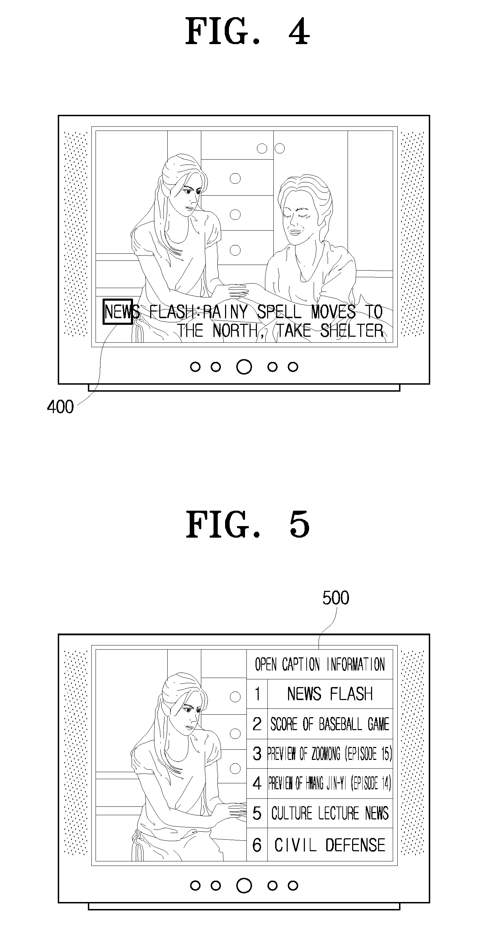

Figure 4 is a mimetic diagram showing an example of a method for capturing open caption information according to an exemplary embodiment of the present invention.

A capture window 400 is applied to each frame displayed on the screen, as shown in Figure 4.

If it is determined that the open caption information is displayed, a recognizing unit may capture the open caption information appearing in the capture window 400. The capturing may be performed so that one text may appear through the pre-process. The capture window 400 is displayed at the bottom left of the screen, as shown in Figure 4, but may be displayed in the centre or the bottom right of the screen, although it is not limited to these positions.

Figure 5 is a mimetic diagram showing an example of a list of open caption information according to an exemplary embodiment of the present invention.

A list 500 generated using the keywords from the open caption information stored in the broadcast receiving apparatus is shown in Figure 5. Specifically, the list 500 shows the open caption information relating to the news flash, score of baseball game, preview of Zoomong (episode 50), preview of Hwang Jin-Yi (episode 14), culture lecture news, and civil defence. The first two or three words from the open caption information may be selected to be used as keywords.

Accordingly, a viewer can always check open caption information relating to a program which the viewer has not previously viewed or a program which the viewer wishes to view again.

The list 500 is generated using the keywords from the open caption information, but may be generated using the date and time of storage of the open caption information and title of the program in which the open caption information is detected. In addition, there are several methods for generating a list, and thus the present invention is not limited thereto.

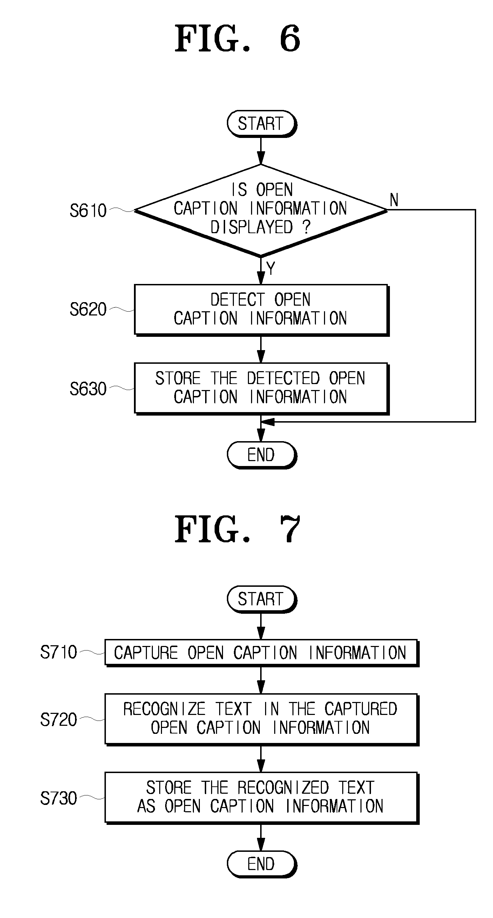

Figure 6 is a flowchart illustrating the steps involved in a method for storing open caption information according to an exemplary embodiment of the present invention.

In Figure 6, if the open caption information detection mode is selected, whether the open caption information is displayed is determined (S610).

In order to determine whether the open caption information is displayed, at least one portion of each frame displayed on the screen is divided into the plurality of blocks, and a matching block in peripheral frames is searched for to determine that the open caption information is displayed if the block searched for represents motion in a certain direction.

Since the open caption information is not displayed at all times, whether the open caption information is displayed on the screen may be periodically determined. If it is determined that the open caption information is displayed (S610), the open caption information may be detected (S620). In other words, the open caption information may be captured from each frame displayed on the screen to be detected.

The detected open caption information is stored (S630). Accordingly, the open caption information may be stored in the form of an image.

Figure 7 is a flowchart illustrating in detail the steps involved in the open caption detecting method of Figure 6 according to an exemplary embodiment of the present invention.

In Figure 7, the open caption information is captured on the assumption that the open caption information is displayed (S710). Specifically, a capture window is applied to a certain portion of each frame to capture the open caption information appearing in the caption window. The text fields may be captured in a pre-processing step from among the open caption information appearing in the caption window.

The pre-processing can comprise binarization, noise removal, field division, feature extraction, and normalization. Binarization refers to the process of converting the pixel value to 0 or 1 on the basis of the comparison between the density value and the set threshold value, each frame being represented by the analogue density value. The threshold value may be generally set to an appropriate value for a target pattern.

The noise removal refers to the process of removing noise by filtering high-frequency noise resulting from the resolution and other characteristics of equipment.

The text fields are recognized in the captured open caption information (S720). The captured open caption information is in the form of an image, and a method for recognizing text fields in the open caption information may be variously implemented by well-known technologies.

The recognized text fields are stored as open caption information (S730).

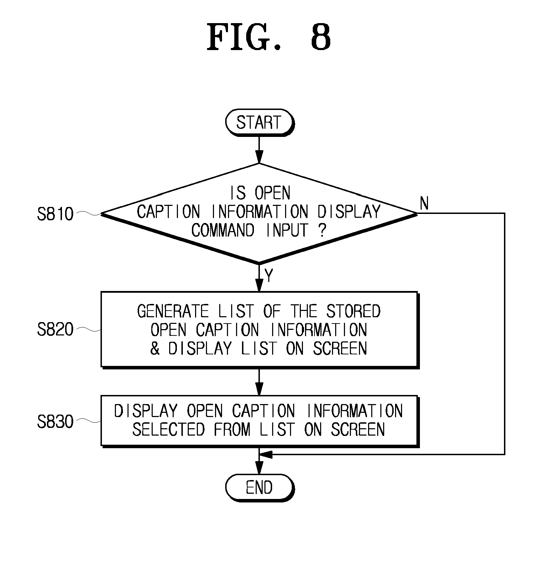

Figure 8 is a flowchart illustrating the steps involved in a method for displaying open caption information according to an exemplary embodiment of the present invention.

In Figure 8, if a viewer inputs the open caption information display command (S810), a list of stored open caption information may be generated to be displayed on the screen (S820). If the open caption information is selected from the displayed list, the selected open caption information may be displayed on the screen (S830). In this situation, the open caption information may be displayed at a time, or displayed while moving from the right to the left in the same manner as the open caption information was originally displayed.

Accordingly, open caption information which the viewer has not previously viewed or which the viewer wishes to view again is displayed, and thus user convenience may be enhanced.

As described above, in the exemplary embodiments of the present invention, the open caption information may be stored and displayed in order to improve user convenience.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A broadcast receiving apparatus comprising:
means for determining whether a received broadcast signal comprises open caption information; and
means for storing the open caption information in response to a determination that the broadcast signal comprises open caption information.

2. The apparatus as claimed in claim 1, wherein the determining means is arranged to divide at least one portion of a first frame of the broadcast signal into a plurality of blocks, and to search for a matching block in other frames to determine whether the open caption information is present, wherein it is determined that open caption information is present if a result of the search for the matching block indicates motion in a certain direction.

3. The apparatus as claimed in claim 1 or 2, further comprising a detector for detecting the open caption information, wherein the detector is arranged to apply a capture window to a frame of the broadcast signal, and the detector comprises:
a capturing unit for capturing the open caption information; and
a recognizing unit for recognizing text fields in the captured open caption information.

4. The apparatus as claimed in claim 3, wherein the storing means comprises a storage unit arranged to store the recognized text fields as the open caption information.

5. The apparatus as claimed in claim 1 or 2, further comprising a detector for detecting the open caption information, wherein the detector applies a capture window to a frame of the broadcast signal, and the detector comprises a capturing unit which captures the open caption information; and wherein the storing means is arranged to store the captured open caption information.

6. The apparatus as claimed in any preceding claim, further comprising:
an input unit for enabling selection of an open caption information detection mode; and
a controller for controlling the determiner and detector to detect and store the open caption information according to whether the open caption information is available, if the open caption information detection mode is selected.

7. The apparatus as claimed in any one of claims 1 to 5, further comprising:
an input unit for receiving an open caption information display command; and
a controller for controlling display of the stored open caption information on a screen, in response to receiving the open caption information display command.

8. The apparatus as claimed in claim 7, further comprising an on-screen display (OSD) processor for generating a first list of the open caption information stored in the storing means and displaying the first list on the screen if the open caption information display command is input,
wherein the controller is arranged to control the display of the open caption information selected from the first list, on the screen.

9. The apparatus as claimed in claim 8, wherein the OSD processor is arranged to generate a second list including at least one of a date and time of storage of the open caption information stored in the storing means, a title of a program in which the open caption information is detected, and keywords from the open caption information, and displays the second list on the screen.

10. A method for storing open caption information in a broadcast receiving apparatus, the method comprising:
determining whether the broadcast signal comprises open caption information; and, if it is determined that the broadcast signal comprises open caption information,
storing the open caption information.

11. The method as claimed in claim 10, wherein the determining comprises dividing at least one portion of a first frame into a plurality of blocks, and searching for a matching block other frames to determine that the open caption information is displayed if a result of the search for the matching block indicates motion in a certain direction.

12. The method as claimed in claim 10 or 11, further comprising detecting the open caption information, wherein the step of detecting comprises:
applying a capture window to a frame to capture the open caption information; and
recognizing text fields in the captured open caption information.

13. The method as claimed in claim 12, wherein storing comprises storing the recognized text fields as the open caption information.

14. The method as claimed in claim 10, further comprising detecting the open caption information, wherein the step of detecting comprises:
applying a capture window to a frame to capture the open caption information; and
wherein the storing comprises storing the captured open caption information.

15. The method as claimed in claim 12, 13 or 14 , further comprising determining whether an open caption information detection mode is selected, wherein the determining, the detecting, and the storing are performed, if the open caption information detection mode is selected.

16. The method as claimed in any one of claims 10 to 14, further comprising:
receiving an open caption information display command; and
displaying the stored open caption information on a screen, in response to receiving the open caption information display command.

17. The method as claimed in claim 16, further comprising generating a list of the stored open caption information and displaying the list on the screen in response to receiving the open caption information display command, wherein the displaying the stored open caption information comprises displaying an open caption information selected from the list on the screen.

18. The method as claimed in claim 17, wherein the list comprises at least one of a date and time of storage of the stored open caption information, a title of a program in which the open caption information is detected, and keywords from the open caption information.

19. A controller for controlling a broadcast receiving apparatus, wherein the controller is configured to control the detection of open caption information within a received broadcast signal, control the capture of the detected open caption information displayed on the screen, control the storage of the captured open caption information in a storage unit; and control the display of the stored open caption information on a screen.
